(19) Europäisches Patentamt
European Patent Office
Office européen des brevets

(11) **EP 3 013 055 A1**

(12) **EUROPEAN PATENT APPLICATION**

(43) Date of publication:
**27.04.2016 Bulletin 2016/17**

(51) Int Cl.:
*H04N 21/234* (2011.01)  *H04N 21/81* (2011.01)
*H04N 21/44* (2011.01)  *H04N 21/262* (2011.01)
*H04N 21/2668* (2011.01)  *H04N 21/258* (2011.01)

(21) Application number: **14306688.4**

(22) Date of filing: **23.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Straub, Gilles**
**35576 Cesson-Sévigné (FR)**

• **Neumann, Christoph**
**35576 Cesson-Sévigné (FR)**
• **Le Scouarnec, Nicolas**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Video frame set processing cost management method, apparatus and related computer program product**

(57) A method and a related electronic device for selecting, from a plurality of candidate video frame sets, a candidate video frame set to be inserted in a video frame slot of a given video content. It comprises obtaining the plurality of candidate video frame sets according to ranking values of a sorting parameter associated with each of the candidate video frame sets, thereby obtaining a list of candidate video frame sets and for each candidate video frame set of the list, determining a processing cost for inserting the candidate video frame set and applying the processing cost for obtaining an updated candidate video frame set ranking value according to the sorting parameter. The list is then sorted according to the updated ranking values of the sorting parameter and a selection of a candidate video frame set of the sorted list according to the updated ranking value.

Figure 1

## Description

### 1. Domain

The present disclosure relates to the mitigation of data processing in a data processing system. More specifically, the disclosure relates to the management of data processing for determining a strategy of data processing in a computerized system.

### 2. Prior Art Solutions

It is known that processing resources are expensive, more specifically in context where energy cost is increasing. For a content provider, regarding the cost of energy, a good option for saving money is to limit, to mitigate, data processing cost. Furthermore, mitigating data processing allows spending less energy and thus contributes to preservation of natural resources.

This necessity of reducing costs may sometimes conflict with economic aspects. This is for example the case for a content provider which has to provide personalized video content to a customer. The personalized video content is often adapted to a profile of a customer. Typically, a personalized video content comprises base video content, which is the same for all users (for example a video corresponding to a movie) and content which is specific to a user or a group of users (which is added when the personalized video content is processed). The specific content is typically a video frame set. The video frame set may for example be advertisement or other content adapted to a specific user or group of user. The profile is for example obtained from a database or obtained from data given by the customer itself, via an accessing device (i.e. the device which wants to access to the content). Building personalized video content implies taking into account a plurality of aspects. Among these aspects, interests of the customer are important (i.e. what the customer likes to do, to watch, to buy, etc.). When the interests of a current customer are similar to the interests of many other customers, building personalized video content is easier: the personalized video content may be built once and cached in a specific location by a so called cache module; thus when the base video content is requested by the accessing device of the current customer, there's no need to rebuild the content; it is sufficient to extract it from the cache location and transmit it to the accessing device. In such a case, building the personalized video content is easy.

However, the interests of a customer often vary widely from the interests of another customer, leading to less advantages of caching prebuilt contents. This is due to at least one factor: the granularity of the analysis of the interests of the customers. For example, when the accessing device used for requesting the personalized video content comprises an internet browsing module, cookies are placed in the accessing device by the various sites and applications which are accessed by the customer. These cookies comprise information on the customer and are used for profiling the customer. Due to the progression of the profiling capabilities, the profile which is obtained for a given customer is very precise. Thus, the interests that may be determined by such profiles are also precise. Consequently, the probability that two customers share the same interests decreases with the precision of the profile.

Consequently, when the interest of a customer does correspond to a personalized video content which has been cached, the content provider has two solutions: either building a personalized video content adapted to the customer (which is expensive in term of processing and energy cost), or proposing a default cached content to the customer, with the risk that it is not adapted to the expectations of the customer.

The previous problem is increased when competitors compete for product placement. It has to be known, indeed, that when video frame sets are advertisement, the location of the video frame set in the personalized video content is often sold to a company which wants to insert its own advertisement. The competition between companies for obtaining the right to place an advertisement is hard and the situation may change very quickly. This means that at a given time a first company may have the right to place an advertisement while one minute later the location of the advertisement will be sold to another company.

Thus, in such a case, caching a personalized video content becomes very difficult and consequently the processing cost increases. The content provider has to manage the creation of the personalized video content in view of the initial request of the user for obtaining a base video content, and in view of the offers for placing video frame sets. This has to be done by taking into account the processing costs, the energy savings, etc.

There is therefore a need for a method and apparatus which allows taking care of the various cost attached to the processing of video content by taking into account the processing costs, the energy savings, etc.

### 3. Summary

The present disclosure aims at alleviating some of the inconveniences of prior art.

More specifically, the present disclosure relates to a method, implemented in an electronic device, for selecting, from a plurality of candidate video frame sets, a candidate video frame set to be inserted in a video frame slot of a given video content.

According to the disclosure, the method comprises:

obtaining the plurality of candidate video frame sets according to ranking values of a sorting parameter associated with each of the candidate video frame sets, thereby obtaining a list of sorted candidate video frame sets;
for each candidate video frame set of the list:

determining a processing cost for inserting the candidate video frame set;
applying the processing cost for obtaining an updated candidate video frame set ranking value according to the sorting parameter;

sorting the plurality of candidate video frame sets according to the updated ranking values of the sorting parameter;
selecting a candidate video frame set of the sorted list, called selected candidate video frame set, according to the updated ranking value.

According to a specific aspect, the method comprises determining a caching cost for caching a video chunk in which the candidate video frame set, has been inserted previously and applying the caching cost for obtaining an updated candidate video frame set ranking value according to the sorting parameter.

According to a specific aspect, the method comprises billing an owner of the selected candidate video frame set according to a billing policy.

According to a specific aspect, the billing policy comprises determining a billed price in function of a proposal at least one unselected candidate video frame set of the plurality of candidate video frame sets.

According to a specific aspect, the determining of a billed price comprises selecting a proposal associated with the candidate video frame set located after the selected candidate video frame set in the list.

According to a specific aspect, the candidate video frame sets are video chunks of the given video content.

According to a specific aspect, the video chunks are targeted advertisements.

The disclosure also relates to an electronic device, for selecting, from a plurality of candidate video frame sets, of a candidate video frame set to be inserted in a video frame slot of a given video content.

According to the disclosure, the device comprises:

a computing module, obtaining the plurality of candidate video frame sets according to ranking values of a sorting parameter associated with each of the candidate video frame sets, thereby obtaining a list of sorted candidate video frame sets;
a circuit which, for each candidate video frame set of the list:

determines a processing cost for inserting the candidate video frame set;
applies the processing cost for obtaining an updated candidate video frame set ranking value according to the sorting parameter;

a sorting module, sorting the plurality of candidate video frame sets according to the updated ranking values of the sorting parameter;
a selecting module, selecting a candidate video frame set of the sorted list, called selected candidate video frame set, according to the updated ranking value.

In a preferred embodiment, the various steps of the methods according to the present principles are implemented by one or more software or computer programs comprising software instructions for execution by a data processor or a module, and adapted for controlling the execution of the different process steps.

According to a specific aspect, the device comprises a circuit which is operably configured to determine a caching cost for caching a video chunk in which the candidate video frame set has been inserted previously and to apply the caching cost for obtaining an updated candidate video frame set ranking value according to the sorting parameter.

According to a specific aspect, the device comprises a circuit which is operably configured to bill an owner of the selected candidate video frame set according to a billing policy. According to a specific aspect, the device comprises a circuit which is operably configured to determine a billed price in function of a proposal of at least one unselected candidate video frame set of the plurality of candidate video frame sets.

According to a specific aspect, the circuit which determines a billed price as a function of a proposal of at least one unselected candidate video frame set of the plurality of candidate video frame comprises a selecting module operably configured to select a proposal associated with the candidate video frame set located after the selected candidate video frame set in the list.

According to a specific aspect, the candidate video frame sets are video chunks of the given video content.

According to a specific aspect, the video chunks are targeted advertisements.

The present disclosure also relates to a computer program product downloadable from a communications network and/or stored in a computer-readable carrier and/or executable by a microprocessor, comprising program code instructions for the execution of the method for selecting, from a plurality of candidate video frame sets, a candidate video frame set to be inserted in a video frame slot of a given video content, when it is executed on a computer.

This computer program product can use any programming language, and be in the form of source code, object code or intermediate code between source code and object code, such as a partially compiled form, or in any other desirable form.

The present principles also provide a medium readable by a data processor, and containing instructions of a program as mentioned above.

The information carrier may be any entity or device capable of storing the program. For example, the medium may comprise a storage medium, such as a ROM, for example a CD ROM or a microelectronic circuit, or a magnetic recording medium, such as a diskette (floppy disk) or a hard drive.

On the other hand, the information carrier may be a transmissible carrier such as an electrical or optical signal which may be conveyed via electrical or optical cable, by radio or by other means. The program according to the present principles may in particular be downloaded over a network such as the Internet.

Alternatively, the information carrier may be an integrated circuit in which the program is incorporated, the circuit being adapted to perform or to be used in carrying out the process in question.

According to one embodiment, the present principles are implemented using software and / or hardware. In this context, the term "module" can correspond in this document as well as a software component to a hardware component or a set of hardware and software components.

A software component is one or more computer programs, one or more subprograms of a program, or more generally to any element of a program or software capable to implement a function or set of functions, according to what is described below for the module. Such software component is executed by a processor of a physical entity (TV, projector, terminal, server, gateway, router, etc.) and is likely to access the hardware resources of the physical entity (memory, storage media, bus communication, e-cards I/O, user interfaces, etc.).

Similarly, a hardware component is any component of a hardware (or hardware) that can implement a function or set of functions, according to what is described below for the module. It may be a component integrated with programmable hardware or software for the execution processor, for example an integrated circuit, a smart card, a memory card, an electronic card for the execution of a firmware, etc.

Each component of the system described above provides its own software modules. The various embodiments described above can be combined together for the implementation according to the present principles.

**4. Drawings**

The present principles are described in the following by way of examples in connection with the accompanying figures without limiting the scope of the protection as defined by the claims. In the figures:

- figure 1 illustrates the steps of the method for selecting a candidate video frame set;
- figure 2 illustrates the structure of a device for selecting a candidate video frame set.

**5. Description of Embodiments**

5.1 Principles

As explained previously, the present principles are related to calculating a processing cost of the video frame sets. A video frame set has a processing cost which is greater or equal to zero. This processing cost is for example representative of the cost for modifying the video frame set or for inlaying the video frame set in another video (called the base video). This processing cost is used for calculating a global cost of the insertion of the video frame set regarding other gain or cost aspects of the video frame set. The video frame sets and their respective costs are processed in a list. The list is ordered regarding the global cost. The simplest way to choose a video frame set in this list is then to choose the video frame set which has the lower global cost (or the higher global gain, which is the same, when the cost is negative). Indeed, other cost (or gain) may be attached to video frame sets. For cost, this may for example be storage costs or network transmission cost. For gain, this may for example be a sum of money which is proposed for inserting or processing the specific content. This may also be the time or energy which is gained for processing other content. This may also additionally be the gain or cost, in terms of branding for the content provider (i.e. even if the video frame set is expensive in terms of processing resources, the content provider may choose this video frame set because it increases its own brand value and image).

The video frame sets information (various costs/gain) is then inserted in a data structure along with an identification of the video frame sets. An overall cost is calculated, which is basically the sum of the costs and the gains and the video frame set with the highest sum is chosen.

In other words, the video frame set insertion expected cost (the processing cost) is computed for the list of candidate video frame sets, and the expected processing cost is deduced from/added to the overall cost (or gain) to determine the a selected candidate.

The content provider may then apply specific billing options for the processing of the content. For example a second price rule may apply, meaning that the owner of the selected video frame set will be charged the price proposed by the owner of the video frame set (not selected) ranked just below him. According to variant embodiments the owner of the selected video frame set will be charged the minimum price he could have paid to ensure that its video frame set would have been selected.

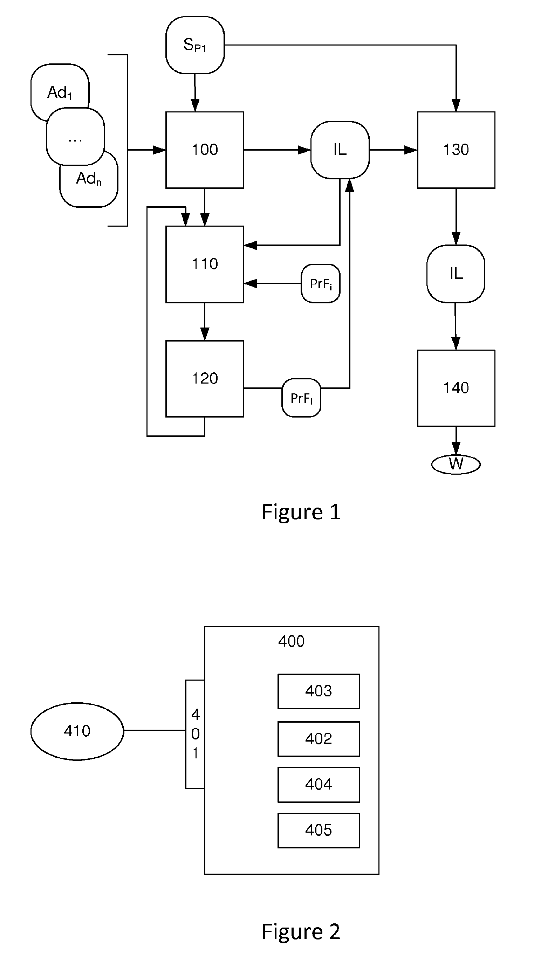

In relation with Figure 1, the present principles comprises method for selecting from a plurality of candidate video frame sets ($Ad_1$,..., $Ad_n$), a candidate video frame set ($Ad_x$) to be inserted in a video frame slot of a given video content (VC). The method comprises:

> obtaining (100) the plurality of candidate video frame sets ($Ad_1$,..., $Ad_n$) according to ranking values of a sorting parameter ($S_{p1}$) associated with each of the candidate video frame sets ($Ad_1$,..., $Ad_n$), thereby obtaining a list (IL) of candidate video frame sets;
> for each candidate video frame set ($Ad_i$) of the list:
>
>> determining (110) a processing cost ($PrF_i$) for inserting the candidate video frame set ($Ad_i$);
>> applying (120) the processing cost for obtaining an updated candidate video frame set ranking value according to the sorting parameter;
>
> sorting (130) the plurality of candidate video frame sets of the list (IL) according to the updated ranking values of the sorting parameter, delivering a sorted list;
> selecting (140) a candidate video frame set of the sorted list, called selected candidate video frame set (W), according to the updated ranking value.

Thus, the method allows mitigating processing cost and increasing efficiency when selecting a video frame set.

An aspect of the disclosure is related to the processing cost and the storage cost (in a cache module or device) of the specific video frame sets. In a content providing system, a user requests a content. This is typically the case for a web platform or for a video streaming platform. One can take the hypothesis that the user arrival rate on the video platform (with parameter $\lambda$) follows a Poisson process; base video content (for example movies) follows a Zipf distribution of exponent $s_m$ over $N_m$ movies; inserted content followZipf distribution of exponent $s_a$ over $N_a$ inserted content. $s_m$, $N_m$, and $s_a$, $N_a$ denote the Zipf distribution parameters for movies and inserted content respectively.

One can assume that the cost for computing an item(i,j) (i.e. inlay video frame set j with base video content i) is C and that the cost for storing it over time is S. It can be shown that the expected cost follows equation (15)

$$\mathbb{E}[X] = \sum_{i=1}^{N_m} \sum_{j=1}^{N_a} p_{i,j} \left( \mathbf{1}_{\lambda_{i,j} \geq \frac{S}{C}} \cdot \frac{S}{\lambda_{i,j}} + \mathbf{1}_{\lambda_{i,j} < \frac{S}{C}} \cdot C \right) \quad (15)$$

$$\lambda_{i,j} = \lambda \cdot p_{i,j} \quad\quad\quad (8)$$

$$p_{i,j} = \frac{1}{i^{s_m} H_{N_m, s_m}} \frac{1}{j^{s_a} H_{N_a, s_a}} \quad\quad (7)$$

Where $H_{N,s} = \sum_{i=1}^{N} \frac{1}{i^s}$ is the generalized Harmonic number.

It is also possible to compute a chunk arrival rate as $\lambda_{i,j}$ (see equation (8)). (The chunk is a piece of base video content, in which a video frame set is to be inserted). Basically for a given item (i,j) (base video content=i, video frame set=j), from the distribution, one can compute the arrival rate $\lambda_{i,j}$, and compare it to the S/C ratio to determine whether the optimal cache policy would maintain it in the cache or whether the cache policy would suggest to drop it from the cache.

From equation (15), for each targeted chunk, the expected cost can be computed, depending on its arrival rate.

- If $\lambda_{i,j} >$ S/C, then the expected cost is E(X)=S/($\lambda_{i,j}$);
- If $\lambda_{i,j} <$ S/C, then the expected cost is E(X)=C;

Of course, the previous example of calculation of the processing cost and storage cost is an example embodiment. In function of the constraint of the content provider system, this calculation can be made in another manner. The most important thing is to have a processing cost for the specific content.

### 5.2 Description of a specific embodiment

In this specific embodiment, the present principles are implemented in a system which builds on personalized video frame sets inlaying for on-demand videos, where inlaying comprises inlay of advertisement graphics in pixel zones of video frames of the on-demand videos. The system relies on a public cloud infrastructure. The personalized video chunks (containing inlayed video frame sets) are either calculated on the fly for a given user using cloud compute, or if the chunk is available on a cloud storage cache, are retrieved from that cache. The cloud storage cache contains personalized video chunks that have been calculated previously for other users. In this embodiment, the present principles are implemented for calculating which proposal, among a plurality of proposals, is the best candidate for a personalized video frame set inlaying. In this embodiment, each candidate video frame set of the plurality of candidate video frame sets comes with a financial proposal. According to the present principles this is automatic. Thus in this particular embodiment, the automatic online video advertising system where ads are inlayed in the video in a targeted manner can be compared to a sponsored search system, with differences however: in sponsored search, the banner or images are inexpensive. This is not the case for inlaying ads in a video. Thus, it is important to care about the cost of the video frame sets to inlay for preventing huge consumption of processing means (and loss of revenue) for the personalized video content provider. In this specific embodiment, the sorting parameter ($S_{p1}$) is the financial proposal for inserting the video frame set in the video content. Thus the ranking value is the price offered along with the candidate video frame set. The processing cost and additionally the caching cost are determined as explained previously.

From the above, and more specifically from the calculations of costs (processing and caching), several strategies can be derived for determining processing cost and ranking the candidate video frame sets. Intuitively, the expected cost (as computed above) should be subtracted from the proposal prior ranking for selecting the video frame sets to be inlayed (this corresponds to strategy NP_C3 herein presented).

Simpler and more efficient strategies exist as will be exposed. The embodiments described in this disclosure are based on a nominal policy (refered as NP). According to the NP policy, candidate video frame sets are ranked according to their merchant value (the proposal). Highest proposal is selected for performing the video frame set insertion and the second highest proposal is used for pricing / charging. This nominal policy is source of error since the processing cost of the video frame set associated with the proposal is not accounted for. Thus, the following strategies are derived, according to the method described herein:

- NP_C1: proposals are penalized by the processing cost before ranking, then NP applies. More formally, two lists of ranked proposals are considered: *"ranked_proposals"* and *"ranked_penalized"* proposals. Proposals corresponding to items not yet in the cache are penalized by the processing cost of the item (b:=b-C), and inserted in *"ranked_penalized"* proposals list; proposals corresponding to items already in the cache are left unpenalized, and inserted unchanged in *"ranked_penalized"* proposals. Then NP applies on *"ranked_penalized"* proposals list: highest *"penalized"* proposal is selected, but the *"ranked_proposals"* list is used for selecting the price (next highest proposal is used to charge the selected highest penalized proposal).

- NP_C3: proposals are penalized by the expected cloud cost before ranking, then normal NP applies. More formally, two lists of ranked proposals are considered: *"ranked_proposals"* and *"ranked_penalized"* proposals. For each item, its arrival rate $\lambda$ is computed (see equations 7 and 8) and its proposal is penalized as follow :

  ◦ If $\lambda_{i,j} >$ S/C, then the expected cost is E(X)=S/( $\lambda_{i,j}$)
  ◦ If $\lambda_{i,j} <$ S/C, then the expected cost is E(X)=C.

The penalized proposals are stored in *"ranked_penalized"* proposals. Then NP applies on *"ranked penalized"* proposals: highest penalized proposal is selected, but the *"ranked_proposals"* list is used for selecting the price (next highest proposal is used to charge the selected highest penalized proposal).

Of course, the use of two lists is not necessary: a single list can also be used where a specific marking is done for penalized proposals, as previously presented in the principles of the disclosure. Furthermore, even if the term "list" is used, it is understood that, in a broader interpretation, a data structure (for example an XML file or a Database) can be use with the advantages of such data structure: the possibility of sorting on various fields of the data structure as a function of various needs.

Based on the previous strategies (NP_C1 and NP_C3), two other strategies are considered according to the present principles. NPP_C1 and NPP_C3 are similar to NP_C1 and NP_C3 respectively, except that the *"penalized proposals"* list is used also for pricing: the next highest proposal from the penalized proposal list is used to compute the price (after having unpenalized the proposal, to retrieve the original proposal). In other words, the price to pay is what the holder of the proposal should at least have paid to win.

The NP_Cx policy uses the NP approach for the pricing, i.e. use the initial proposal list to select the next highest proposal, while the NPP_Cx policy uses the penalized proposal list to select the next highest proposal (and then *unpenalize* the proposal).

In summary the C1 (NP or NPP) policy corresponds to a practical approach, where the only thing required to apply the penalty is to check the presence of the item in the cache, and to know the cost to compute a single item if not in cache. The C3 (NP or NPP) policy is a more theoretical approach where analytic expressions of the expected mean costs are taken into account. It may therefore be less obvious to implement in practice, but may be closer to the reality of the costs.

5.3 <u>Other aspects and advantages</u>

Figure 2 is an example embodiment of a device for selecting video frame sets in a personalized video provider system according to the present principles. The device (400) comprises a network interface (401) connecting the device to a network (410), e.g. for obtaining video frame set candidates (not shown), and for obtaining cost and gain associated with each candidate; a sorting unit (403) for sorting lists of video frame set candidates according to sorting parameters; a computing unit (402) for applying processing cost and/or caching cost; a determining unit (404) for determining processing cost and caching cost; possibly, the device comprise a billing unit (405) for calculating the price that should be charge to the owner of the selected video frame set candidate.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

**Claims**

1. A method, implemented in an electronic device, for selecting, from a plurality of candidate video frame sets ($Ad_1$,..., $Ad_n$), a candidate video frame set ($Ad_x$) to be inserted in a video frame slot of a given video content (VC), said method comprising:

obtaining (100) said plurality of candidate video frame sets ($Ad_1$,..., $Ad_n$) according to ranking values of a sorting parameter ($S_{p1}$) associated with each of said candidate video frame sets ($Ad_1$,..., $Ad_n$), thereby obtaining a list (IL) of candidate video frame sets;

for each candidate video frame set ($Ad_i$) of said list:

determining (110) a processing cost ($PrF_i$) for inserting said candidate video frame set ($Ad_i$);
applying (120) said processing cost for obtaining an updated candidate video frame set ranking value according to said sorting parameter;

sorting (130) said plurality of candidate video frame sets of said list (IL) according to said updated ranking values of said sorting parameter, delivering a sorted list;
selecting (140) a candidate video frame set of said sorted list, called selected candidate video frame set, according to said updated ranking value.

2. The method according to claim 1, wherein it comprises:

determining a caching cost for caching a video chunk in which said candidate video frame set, has been inserted previously;
applying said caching cost for obtaining an updated candidate video frame set ranking value according to said sorting parameter.

3. The method according to claim 1, wherein it comprises billing an owner of said selected candidate video frame set according to a billing policy.

4. The method according to claim 3, wherein said billing policy comprises determining a billed price in function of a proposal of at least one unselected candidate video frame set of said plurality of candidate video frame sets.

5. The method according to claim 4, wherein determining a billed price comprises selecting a proposal associated with the candidate video frame set located after said selected candidate video frame set in said list.

6. The method according to claim 1, wherein said candidate video frame sets are video chunks of said given video content.

7. The method according to claim 2, wherein said video chunks are targeted advertisements.

8. An electronic device, for selecting, from a plurality of candidate video frame sets ($Ad_1$,..., $Ad_n$), of a candidate video frame set to be inserted in a video frame slot of a given video content (VC), said device comprising :

a computing module, obtaining said plurality of candidate video frame sets ($Ad_1$,..., $Ad_n$) according to ranking values of a sorting parameter ($S_{p1}$) associated with each of said candidate video frame sets ($Ad_1$,..., $Ad_n$), thereby obtaining a list(IL) of candidate video frame sets;
a circuit which, for each candidate video frame set ($Ad_i$) of said list:

determines a processing cost ($PrF_i$) for inserting said candidate video frame set ($Ad_i$);
apply said processing cost for obtaining an updated candidate video frame set ranking value according to said sorting parameter;

a sorting module, sorting said plurality of candidate video frame sets of said list, according to said updated ranking values of said sorting parameter, delivering a sorted list;
a selecting module, selecting a candidate video frame set of said sorted list, called selected candidate video frame set, according to said updated ranking value.

9. The device according to claim 8, wherein it comprises a circuit which is operably configured to:

determine a caching cost for caching a video chunk in which said candidate video frame set has been inserted previously; and to
apply said caching cost for obtaining an updated candidate video frame set ranking value according to said sorting parameter.

10. The device according to claim 8, wherein it comprises a circuit which is operably configured to bill an owner of said selected candidate video frame set according to a billing policy.

11. The device according to claim 10, wherein the device comprises a circuit which is operably configured to determine a billed price as a function of a proposal of at least one unselected candidate video frame set of said plurality of candidate video frame sets.

12. The device according to claim 11, wherein the circuit which determines a billed price as a function of a proposal of at least one unselected candidate video frame set of said plurality of candidate video frame sets comprises a selecting module is operably configured to select a proposal associated with the candidate video frame set located after said selected candidate video frame set in said list.

13. The device according to claim 8, wherein said candidate video frame sets are video chunks of said given video content.

14. The device according to claim 9, wherein said video chunks are targeted advertisements.

15. A computer program product downloadable from a communications network and/or stored in a computer-readable carrier and/or executable by a microprocessor, **characterized in that** it comprises program code instructions for the execution of the method according to claim 1, when it is executed on a computer.

Figure 1

Figure 2

Europäisches
Patentamt

European
Patent Office

Office européen
des brevets

# EUROPEAN SEARCH REPORT

Application Number

EP 14 30 6688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/089988 A1 (FARB JONATHAN E [US] ET AL) 27 March 2014 (2014-03-27) * paragraph [0009] - paragraph [0135]; figures 1-3,13 * | 1-15 | INV. H04N21/234 H04N21/81 H04N21/44 H04N21/262 |
| A | US 2003/188308 A1 (KIZUKA YOSHIHISA [JP]) 2 October 2003 (2003-10-02) * abstract * | 1-15 | H04N21/2668 H04N21/258 |
| A | US 2011/087509 A1 (SCHEPERS TRISHA [US] ET AL) 14 April 2011 (2011-04-14) * abstract * | 1-15 | |

TECHNICAL FIELDS
SEARCHED      (IPC)

H04N

The present search report has been drawn up for all claims

| Place of search | Date of completion of the search | Examiner |
|---|---|---|
| The Hague | 25 March 2015 | Santos Conde, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6688

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2015

| Patent document cited in search report | | Publication date | Patent family member(s) | | Publication date |
|---|---|---|---|---|---|
| US 2014089988 | A1 | 27-03-2014 | NONE | | |
| US 2003188308 | A1 | 02-10-2003 | JP 2003289521 A | | 10-10-2003 |
| | | | US 2003188308 A1 | | 02-10-2003 |
| US 2011087509 | A1 | 14-04-2011 | US 2008189734 A1 | | 07-08-2008 |
| | | | US 2011087509 A1 | | 14-04-2011 |

EPO FORM P0459

For more details about this annex : see Official Journal of the European Patent Office, No. 12/82